# FASCICULE DE BREVET EUROPEEN

(11) **EP 1 291 817 B1**
(45) Date de publication et mention de la délivrance du brevet: **04.07.2007**
(21) Numéro de dépôt: 02354131.1
(22) Date de dépôt: 03.09.2002
(51) Int. Cl.: G06K 19/073

(54) **Détection d'une variation de l'environnement d'un circuit intégré**
Nachweis von Umgebungsvariationen in einer Integrierten Schaltung
Variation detection of an integrated circuit environment

(30) Priorité: 04.09.2001 FR 0111435
(43) Date de publication de la demande: 12.03.2003
(73) Titulaire: STMicroelectronics S.A., 92120 Montrouge (FR)
(72) Inventeur: Wuidart, Sylvie, 83910 Pourrieres (FR); Wuidart, Luc, 83910 Pourrieres (FR); Bardouillet, Michel, 13790 Rousset (FR); Ballthazar, Pierre, 13100 Aix en Provence (FR)
(74) Mandataire: de Beaumont, Michel

(56) Documents cités:
- FR-A- 2 633 749
- US-A- 4 041 386
- US-A- 5 036 460

## Description

La présente invention concerne le domaine des circuits intégrés et, plus particulièrement, la détection de variations de paramètres environnementaux d'une puce de circuit intégré en fonctionnement.

Les systèmes de surveillance de variables liées à l'environnement d'un circuit intégré telles que la température, la tension d'alimentation, etc., servent notamment à détecter une éventuelle violation de la puce de circuit intégré dans des systèmes protégés. Il peut s'agir, par exemple, de détecter d'éventuelles interventions externes au circuit intégré dans le but d'en pirater des données qu'il contient. Cette dernière application concerne plus particulièrement les cartes à puce.

Un autre exemple d'application de systèmes de surveillance d'une variable environnementale d'un circuit intégré est l'autorisation de fonctionnement d'un tel circuit par rapport à une plage, par exemple de températures, pour laquelle le circuit est destiné.

Généralement, les éléments de surveillance sont dédiés à une variable donnée. Par exemple, on utilise une tension de seuil pour détecter d'éventuelles variations de température, et on interprète analogiquement les résultats de la mesure pour déterminer une éventuelle violation de l'environnement extérieur de la puce.

Un inconvénient est alors que l'on doit multiplier le nombre de circuits de détection avec le nombre de variables ou paramètres que l'on souhaite surveiller.

Un autre inconvénient est que l'obtention d'une mesure analogique nécessite une conversion pour être interprétée par un système numérique équipant généralement la puce de circuit intégré, afin de décider des conséquences de l'éventuelle violation.

Un autre inconvénient est qu'une variation des paramètres environnementaux peut intervenir sans qu'il y ait violation de la puce. Par exemple, les conditions extérieures de température peuvent être modifiées de façon notable (plusieurs dizaines de degrés). Il serait souhaitable de pouvoir distinguer une variation liée à une violation d'une variation liée à un changement normal des conditions de fonctionnement.

La présente invention vise à proposer une nouvelle méthode de détection de variations d'au moins un paramètre environnemental d'un circuit intégré qui pallie les inconvénients des solutions connues.

L'invention vise plus particulièrement à proposer une solution qui, au moyen d'un même circuit, permette de surveiller plusieurs paramètres environnementaux du circuit intégré.

L'invention vise également à détecter un écart des paramètres environnementaux par rapport à une valeur de référence.

L'invention vise également à proposer une solution évitant le recours à des convertisseurs analogique/numérique des résultats de mesure.

L'invention vise en outre à permettre une adaptation automatique du système de détection aux variations normales d'environnement.

Pour atteindre ces objets, la présente invention prévoit un procédé de détection de variations d'au moins un paramètre environnemental d'un circuit intégré, consistant :
à évaluer un retard de propagation d'un front d'un signal dans des éléments retardateurs sensibles à des variations du paramètre environnemental ; et
à comparer le retard courant par rapport à au moins une valeur de référence.

Selon un mode de réalisation de la présente invention, on compare le retard courant mesuré par rapport à deux valeurs seuil prédéterminées définissant une plage de fonctionnement autorisée du circuit intégré.

Selon un mode de réalisation de la présente invention, on compare le retard courant par rapport à une valeur de référence unique.

Selon un mode de réalisation de la présente invention, on asservit la valeur d'un élément retardateur programmable en fonction de l'écart entre le retard courant et la valeur de référence, la plage de variation possible étant, de préférence, prédéterminée.

Selon un mode de réalisation de la présente invention, on compare ledit écart par rapport à deux valeurs seuil prédéterminées.

Selon un mode de réalisation de la présente invention, on synchronise un instant de lecture de bascules dont les entrées respectives sont connectées en sortie des éléments retardateurs pour délivrer un mot binaire constituant une évaluation du retard de propagation courant.

La présente invention prévoit également un circuit intégré, comportant :
un réseau d'éléments retardateurs connectés individuellement à des bascules dont les sorties respectives définissent des bits d'un mot de détection lié à au moins un paramètre environnemental du circuit intégré ; et
des moyens de comparaison dudit mot courant par rapport à au moins un mot binaire de référence.

Selon un mode de réalisation de la présente invention, lesdits éléments retardateurs sont en parallèle et ont leur borne d'entrée commune reliée en sortie d'un élément retardateur programmable dont une borne d'entrée constitue une borne d'entrée du circuit de détection.

Selon un mode de réalisation de la présente invention, ledit comparateur fournit un mot de configuration du retardateur programmable à partir d'une comparaison de le mot courant par rapport à une valeur de référence.

Selon un mode de réalisation de la présente invention, le circuit comporte des moyens pour fixer une plage de variation du retard programmable.

Selon un mode de réalisation de la présente invention, lesdits éléments retardateurs sont en série.

Selon un mode de réalisation de la présente invention, le circuit comporte en outre un élément retardateur moyen intercalé entre une borne d'application d'un signal de déclenchement de lecture et les entrées d'horloge respectives des différentes bascules.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, par une vue schématique, un circuit intégré équipé d'un circuit de détection selon la présente invention ;
la figure 2 représente un premier mode de réalisation d'un circuit de détection selon la présente invention ;
la figure 3 représente un premier mode de réalisation d'un circuit d'adaptation automatique du circuit de la figure 2 ;
la figure 4 représente un deuxième mode de réalisation d'un circuit d'adaptation automatique du circuit de la figure 2 ; et
la figure 5 représente un deuxième mode de réalisation d'un circuit de détection selon la présente invention.

Les mêmes éléments ont été désignés par les mêmes références aux différentes figures. Pour des raisons de clarté, seuls les éléments qui sont nécessaires à la compréhension de l'invention ont été représentés en figures et seront décrits par la suite. En particulier, l'exploitation des résultats de la détection pour interdire l'accès aux données ou pour tout autre usage est à la portée de l'homme du métier.

Une caractéristique de la présente invention est d'évaluer un retard de propagation d'un signal électrique dans des éléments retardateurs qui sont individuellement sensibles à des variations de l'environnement du circuit intégré.

L'invention tire profit du fait que de nombreux paramètres environnementaux d'un circuit intégré, c'est-à-dire des paramètres qui ne sont pas directement liés à la structure interne du circuit, comme par exemple la température ou la tension d'alimentation du circuit, sont susceptibles lorsqu'ils varient, de modifier les délais de propagation d'un signal dans un chemin électrique.

Ainsi, l'invention utilise cette propriété pour détecter des variations, plus précisément par rapport à une valeur de référence, d'un ou plusieurs paramètres environnementaux du circuit intégré, sans qu'il soit nécessaire de mesurer directement ce ou ces paramètres.

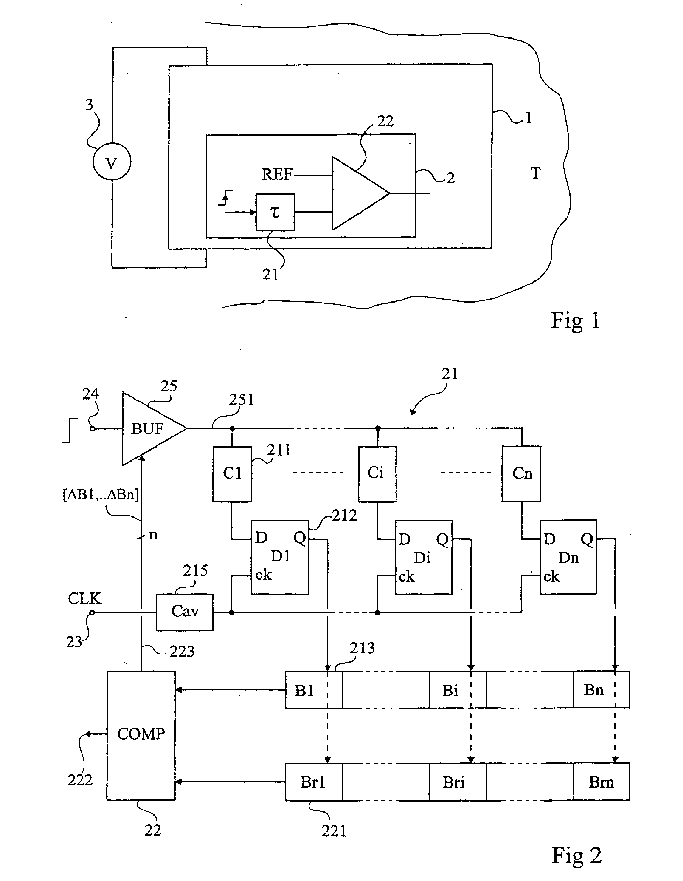

La figure 1 représente, de façon très schématique, un mode de réalisation d'un circuit intégré 1 équipé d'un circuit 2 de détection selon la présente invention. Seul le circuit 2 a été représenté sous forme d'un bloc contenu dans le circuit intégré 1, qui pour le reste est un circuit quelconque.

Le circuit 1 est alimenté par au moins une tension V d'alimentation fournie, par exemple, par un générateur 3. La tension d'alimentation V du circuit 1 constitue, au sens de l'invention, un paramètre environnemental de ce circuit. Un autre paramètre environnemental illustré en figure 1 est la température T à laquelle est soumis le circuit 1. Cette température T peut venir de l'échauffement interne du circuit lié à son fonctionnement ou d'une source externe. Dans tous les cas, cela constitue, au sens de l'invention, également un paramètre environnemental. D'autres paramètres environnementaux peuvent influencer le temps de propagation d'un signal. Il s'agit, par exemple, de la stabilité de la tension d'alimentation, de l'humidité, de radiations, etc.

Selon l'invention, le circuit de détection 2 comporte essentiellement un circuit de mesure 21 de temps de propagation d'un front de déclenchement d'une mesure, plus précisément d'un changement d'état d'un signal binaire. La sortie du circuit 21 est reliée en entrée d'un comparateur 22 dont une autre entrée reçoit une référence REF de comparaison. La sortie du comparateur 22 fournit le résultat d'un éventuel écart du retard par rapport au retard de référence.

La figure 2 représente un premier mode de réalisation d'un circuit 2 de détection selon la présente invention.

Le circuit 21 de mesure des temps de propagation comporte essentiellement n éléments retardateurs 211 (C1, ..., Ci, ..., Cn) ou chemins électriques introduisant préférentiellement des retards différents les uns des autres. Les sorties respectives des éléments 211 sont connectées aux entrées de données (D) de n bascules 212 (D1, ..., Di, ..., Dn). Les sorties respectives (par exemple, les sorties directes Q) des bascules 212 fournissent directement n bits (B1, ..., Bi, ..., Bn) d'un mot binaire représentatif de la mesure effectuée. Par exemple, les bits du mot sont inscrits dans un registre 213 ou tout autre élément de stockage temporaire analogue.

Dans le mode de réalisation illustré par la figure 2, les différents éléments retardateurs 211 sont placés en parallèle les uns aux autres. Leurs bornes d'entrée respectives sont donc reliées ensemble. Un front auquel on souhaite appliquer les différents retards est appliqué sur une borne 24 d'entrée du circuit 2. Cette borne 24 est reliée à un circuit d'entrée 25 introduisant un retard ajustable et servant, comme on le verra par la suite, à une adaptation automatique (calibration) du circuit 2. Le circuit 25 ou "buffer ajustable" (BUF) a sa sortie 251 reliée aux entrées respectives des éléments retardateurs 211.

Les entrées d'horloge Ck respectives des bascules 212 sont reliées ensemble pour que la lecture des états binaires présents en entrée des différentes bascules soit simultanée pour les n bascules.

De préférence, un signal CLK de déclenchement de lecture appliqué sur une borne 23 du circuit 2 traverse un élément retardateur additionnel 215. L'élément 215 introduit un retard correspondant au retard moyen (Cav) des différents chemins électriques introduits par les éléments 211 (en tenant compte des bascules 212 ajoutant un retard identique pour tous les chemins).

Le retardateur 215 est optionnel. Il a essentiellement pour rôle de permettre l'utilisation d'un signal CLK correspondant au signal binaire fournissant le front sur la borne 24. Dans ce cas, les bornes 23 et 24 sont confondues. Le retardateur 215 permet alors de différer la lecture des données présentes sur les entrées des bascules 212 du temps nécessaire à la propagation moyenne dans les chemins électriques 211. En variante, le circuit (non représenté) de génération du front de mesure fournit le signal d'horloge des bascules avec retard. Il s'agit, par exemple, d'un processeur (intégré ou non au circuit 1) pour contrôler les variations et déclencher les actions adaptées.

Lorsque l'on applique un front sur la borne d'entrée 24, ce front arrive sur les entrées D respectives des bascules 212 à des instants différents selon l'importance des retards dus aux éléments respectifs 211 ainsi qu'au retard lié au circuit 25 commun à tous les chemins électriques. Tous les chemins électriques qui génèrent un retard supérieur au retard Cav correspondant à l'élément 215 fournissent un bit à l'état "0" dans la mesure où le front appliqué sur l'entrée 24 ne leur est pas encore parvenu. Tous les chemins qui génèrent un délai inférieur au délai Cav fournissent un bit à l'état "1" dans la mesure où le front arrive sur l'entrée D de la bascule correspondante avant l'expiration du délai Cav.

La variation éventuelle du retard des différents chemins donne une indication indirecte de la dérive de l'environnement extérieur du circuit intégré, que ce soit en termes de température ou de tension d'alimentation.

Pour réaliser les éléments retardateurs 211 des chemins électriques, on pourra utiliser n'importe quels éléments intégrés couramment constitutifs d'éléments retardateurs. Il pourra s'agir, par exemple, de capacités d'oxyde ou de résistances métalliques. Bien entendu, les éléments retardateurs pourront prendre d'autres formes, pourvu d'être sensibles aux paramètres environnementaux que l'on souhaite mesurer pour le circuit. De plus, le choix de la plage de variation des retards apportés par les différents éléments dépend de l'application et de la sensibilité souhaitées.

Le circuit 2 comporte en outre un comparateur 22 (COMP) dont une première entrée reçoit le mot binaire B1, ..., Bi, ..., Bn temporairement mémorisé dans le registre 213 et dont une deuxième entrée de référence reçoit un mot binaire de référence (Br1, ..., Bri, ..., Brn) préalablement stocké dans un registre 221 ou analogue. Le résultat de la comparaison est fourni sur une borne 222 de sortie du comparateur 22.

Dans le mode de réalisation préféré de la figure 2, le comparateur 22 comporte en outre n sorties 223 à destination du circuit 25. Ces n sorties fournissent un mot binaire ΔB1, ..., ΔBn de n bits servant à recalibrer le cas échéant le circuit 25, comme cela sera détaillé par la suite.

De préférence, les retards apportés par les éléments 211 sont croissants (ou décroissant) avec le poids du bit correspondant dans le mot délivré par les bascules 212. L'écart entre les poids respectifs des premiers bits à l'état 0 (respectivement à l'état 1) du mot mesuré et du mot de référence fournit alors une indication sur l'amplitude de la variation des paramètres environnementaux. Cette indication peut être utilisée, par exemple, pour calculer la vitesse de variation des paramètres environnementaux par des mesures successives. On peut alors distinguer une variation relativement lente liée à des changements normaux de conditions de fonctionnement (par exemple, une variation statique de la tension d'alimentation) d'une variation brusque (par exemple, une instabilité dynamique de la tension d'alimentation) liée à une tentative de violation d'accès aux données de la puce.

Le mot binaire de référence stocké dans le registre 221 est obtenu dans une phase de paramétrage du circuit 2. Cette phase est effectuée dans des conditions de référence (par exemple, sous une tension d'alimentation contrôlée de référence et à une température de 25°C).

Selon le mode de réalisation préféré de l'invention, on caractérise ensuite le circuit dans les conditions de fonctionnement correspondant à des conditions extrêmes supérieures et inférieures. En reprenant l'exemple de la température et de la tension d'alimentation, on mesure le mot binaire délivré dans des fenêtres allant de la tension minimale VccMIN à la tension maximale VccMAX et de la température minimale TMIN à la température maximale TMAX de "spécification" du circuit (plage de fonctionnement garantie par le fabricant).

La phase de caractérisation du circuit permet d'obtenir deux valeurs binaires extrêmes encadrant la valeur de référence BREF. L'écart entre les deux valeurs correspond à la plage autorisée. Les valeurs extrêmes servent à configurer (par exemple, au moyen d'une série de commutateurs programmables) le circuit 25 pour définir une plage d'ajustement possible pour ralentir ou accélérer le front appliqué sur la borne 24.

La boucle d'ajustage ainsi obtenue permet ensuite, à chaque phase de caractérisation, de replacer le circuit d'extraction du mot binaire mesuré (chemins électriques 211, 212) dans des conditions de référence. Les deux valeurs extrêmes des mots binaires au-delà desquelles le circuit d'adaptation n'est plus suffisant correspondent aux conditions limites d'environnement que l'on s'est fixé.

En fonctionnement, dès que le circuit 25 n'est plus capable de recentrer le système sur le mot de référence, le comparateur 22 délivre en sortie un signal (en pratique un changement d'état binaire) indicateur d'une violation des conditions d'environnement pour lesquelles est prévu le circuit.

Un avantage de l'invention est qu'elle fournit un circuit de surveillance globale d'un ensemble de variables environnementales du circuit intégré. Bien sûr, avec ce seul circuit, on ne peut pas déterminer si la variation est due à l'un ou l'autre des paramètres. Toutefois, les inventeurs se sont aperçus que, le plus souvent, ce qui est important c'est de détecter un écart par rapport à la plage de fonctionnement autorisée d'un quelconque des paramètres.

Un autre avantage de l'invention est que les entrées-sorties du circuit de détection sont, en raison de la nature même du circuit, numériques sans qu'il soit nécessaire d'effectuer une quelconque conversion.

Un autre avantage de l'invention est qu'en autorisant une adaptation ou calibration numérique de l'élément 25, on rend cette adaptation insensible aux conditions extérieures mesurées (notamment la température).

Un autre avantage de l'invention est que le circuit est aisément intégrable dans une puce de circuit intégré, notamment de type carte à puce.

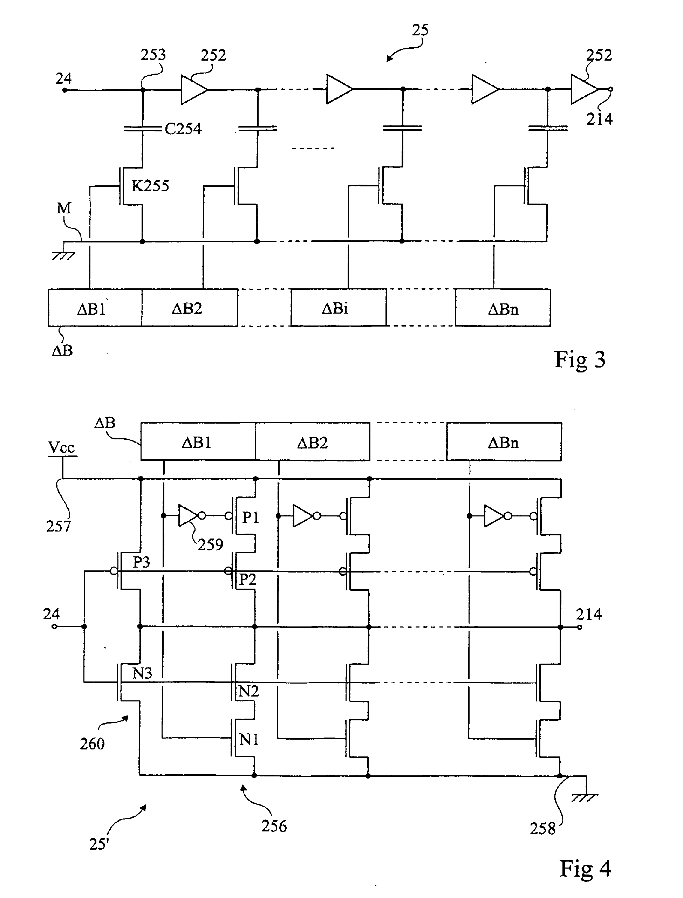

La figure 3 représente un premier exemple de réalisation d'un circuit 25 d'adaptation du circuit de mesure 2 selon l'invention. Dans cet exemple, on utilise une pluralité de portes 252 connectées en série entre la borne 24 d'entrée du circuit 25 et sa borne de sortie 251. Les portes 252 sont, par exemple, de simples éléments non-inverseurs de type "buffer". Les entrées respectives 253 des portes 252 sont reliées individuellement à une première borne d'un condensateur C254 dont l'autre borne est reliée à la masse (M) par un commutateur K255 (par exemple, un transistor MOS). Les grilles des différents transistors K255 reçoivent respectivement l'un des bits ΔB1, ΔB2, ..., ΔBi, ..., ΔBn du mot de programmation fourni par le comparateur 22 (figure 2). Les valeurs respectives des condensateurs C254 sont différentes en fonction du poids du bit dans le mot binaire ΔB. Le mot de programmation peut être obtenu de différentes façons. Par exemple, on peut utiliser directement la différence bit à bit entre le mot mesuré 213 (figure 2) et le mot de référence. On peut également utiliser des moyens plus complexes, par exemple des moyens informatiques pour effectuer des adaptations particulières.

On voit bien qu'une variation du mot mesuré dans la plage autorisée entraînera la mise en conduction ou le blocage respectif d'un des commutateurs K255 et, par voie de conséquence, l'insertion du condensateur C254 de la branche correspondante dans la ligne de retard constituée par les éléments 252 en série. A chaque fois qu'un transistor K255 devient conducteur, il introduit un retard supplémentaire apporté par le circuit 25.

La figure 4 représente un deuxième exemple de réalisation d'un "buffer ajustable" 25' pouvant être mis en oeuvre dans le circuit 2 de la figure 2.

Comme dans le montage de la figure 3, le "buffer" 25' est configuré au moyen du mot binaire ΔB (ΔB1, ΔB2, ..., ΔBn) fourni par la borne 223 du comparateur 22 de la figure 2. Chaque bit de ce mot commande un étage 256 du circuit 25'.

Chaque étage 256 est constitué de deux transistors MOS à canal P en série avec deux transistors MOS à canal N entre deux bornes 257 et 258 d'application d'une tension d'alimentation Vcc. Un premier transistor MOS à canal P P1 a sa grille reliée à un inverseur 259 dont l'entrée reçoit le bit ΔBi correspondant. Un deuxième transistor MOS à canal P P2 de chaque étage 256 a sa grille reliée à la borne d'entrée 24 du circuit 25'. Les transistors P1 et P2 sont en série entre la borne 257 et la borne 214 de sortie du circuit 25'. Un premier transistor à canal N N1 a sa grille reliée à la borne d'application du bit ΔBi correspondant. Un deuxième transistor à canal N N2 a sa grille reliée à la borne d'entrée 24. Les transistors N1 et N2 sont en série entre la borne 214 et la borne de masse 258.

Enfin, le circuit 25' comporte un étage d'entrée 260 constitué de deux transistors respectivement à canal P P3 et à canal N N3 connectés en série entre les bornes 257 et 258. Le point milieu de cette connexion en série est relié à la borne 214 et les grilles respectives des transistors P3 et N3 sont toutes deux reliées à la borne 24.

Quand l'un des bits du mot ΔB est à l'état "1", il rend passant les transistors P1 et N1 de l'étage correspondant. Tant que le signal présent sur la borne 24 est à l'état bas (c'est-à-dire avant l'arrivée d'un front de déclenchement), le transistor N3 ainsi que tous les transistors N2 des étages 256 sont bloqués. Le transistor P3 et les transistors P2 des étages 256 sont passants. Dans ce cas, quand un bit ΔBi est à l'état "1", la borne 214 se trouve à l'état "1".

A l'apparition d'un front montant sur la borne 24, cela provoque la commutation des transistors P3 et N3, le transistor P3 se bloquant tandis que le transistor N3 devient passant. L'instant où la borne 214 va commuter vers la masse dépend du nombre d'étages 256 rendus passants par l'état "1" du bit ΔBi correspondant. En effet, les transistors N2 de tous les étages sont rendus passants à l'apparition du front sur la borne 24 alors que tous les transistors P2 sont à ce moment là bloqués. Par conséquent, le passage à l'état bas de la borne 214 est d'autant plus rapide que le nombre d'étages 256 passants est important.

D'autres circuits d'éléments retardateurs variables et programmables utilisables dans le circuit de la figure 2 pourront être envisagés pourvu d'introduire un retard fonction d'un mot binaire de configuration ΔB délivré par le comparateur 22.

Par exemple, on peut utiliser plusieurs inverseurs ou portes logiques montés en série comme dans le mode de réalisation de la figure 3 et relier les sorties respectives de chaque inverseur aux entrées d'un multiplexeur. La sélection de l'entrée du multiplexeur délivré en sortie est alors effectuée par un mot de programmation, par exemple le mot ΔB, exposé précédemment en relation avec les figures 3 et 4.

Dans la description qui précède, on a fait état d'un mot ΔB sur n bits pour simplifier l'exposé. On notera toutefois que la programmation de l'élément 25 à partir de la comparaison du mot courant (registre 213) au mot de référence (221) peut être effectuée avec un nombre de bits différent. L'utilisation d'un même nombre de bits simplifie toutefois la comparaison en autorisant, par exemple, une combinaison bit à bit des mots courant et de référence.

Dans une application préférée, la détection est effectuée de façon périodique, ce qui permet un asservissement permanent du mot binaire de référence.

Selon une variante de réalisation, le mot binaire ΔB sert directement de mot de comparaison. On stocke deux valeurs de référence délimitant une plage autorisée. On détecte alors une sortie de cette plage par la valeur courante. Le mot de référence Br stocké dans le registre 221 sert alors uniquement à recalibrer le système.

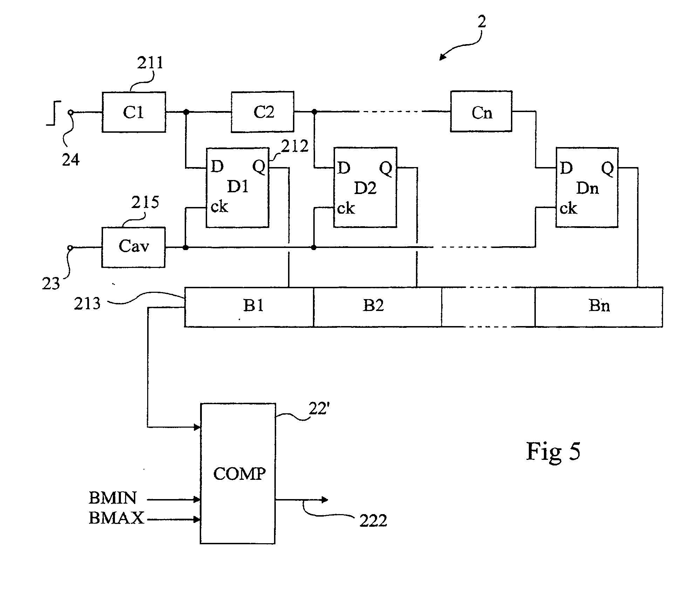

La figure 5 représente un deuxième mode de réalisation d'un circuit de détection de dépassement d'une valeur seuil par un paramètre environnemental du circuit intégré selon la présente invention.

Ce mode de réalisation utilise toujours des éléments retardateurs 211 et des bascules 212 pour générer un mot binaire B1, B2, ..., Bn dans un registre 213. Toutefois, à la différence du mode de réalisation de la figure 2, les chemins électriques 211 sont ici connectés en série. L'entrée D de chaque bascule 212 est par conséquent connectée entre deux chemins (à l'exception de la dernière Dn connectée en sortie du chemin Cn).

Comme dans le mode de réalisation de la figure 2, on utilise un élément 215 apportant un retard moyen Cav dont l'entrée est reliée à la borne 23 d'application du signal déclencheur de la lecture des bascules. L'entrée 24 du circuit 2' reçoit, comme dans les modes de réalisation précédents, un front qui est successivement retardé par les différents chemins en série.

La différence majeure du mode de réalisation de la figure 5 par rapport au mode de réalisation de la figure 2 est l'absence d'éléments retardateurs programmables (25, figure 2).

Dans le mode de réalisation de la figure 5, les mots binaires correspondant aux valeurs minimale BMIN et maximale BMAX de la plage autorisée sont stockés dans des éléments de mémorisation (non représentés). Par exemple, on pourra recourir à des mémoires non volatiles. En fonctionnement, le mot binaire mesuré, stocké temporairement dans le registre 213, est comparé au mot stocké en mémoire non volatile. Si le mot courant n'est pas compris entre les deux valeurs extrêmes BMIN et BMAX, le comparateur 22' délivre sur sa borne 222 une indication de violation des conditions d'environnement extérieur du circuit intégré.

Les chemins électriques (éléments retardateurs 211) étant en série, le mot binaire est constitué successivement d'états "1" puis d'états "0". La comparaison se fait donc sur le rang de la limite entre les "0" et les "1" du mot binaire.

Bien entendu, la présente invention est susceptible de diverses variantes et modifications qui apparaîtront à l'homme de l'art. En particulier, la réalisation pratique des chemins électriques constituant les éléments retardateurs est à la portée de l'homme du métier à partir des indications fonctionnelles et de l'application envisagée. Par exemple, selon que la température environnementale du circuit intégré constitue ou non un paramètre à détecter, on utilisera des résistances métalliques ou en silicium polycristallin.

De plus, la longueur des mots binaires de détection dépend de la plage de variation autorisée et la sensibilité souhaitée. A titre d'exemple particulier de mode de réalisation, la longueur des mots binaires est comprise entre 8 et 16 bits.

Enfin, la réalisation pratique du comparateur 22 pour déterminer un signal indicateur d'un environnement hors des limites prévues et un signal asservissement destiné à un retardateur variable sont à la portée de l'homme du métier en utilisant des moyens classiques à partir des indications fonctionnelles données ci-dessus.

## Revendications

1. Procédé de détection de variations d'au moins un paramètre environnemental (V, T) d'un circuit intégré (1), **caractérisé en ce qu'**il consiste :
à évaluer un retard (τ) de propagation d'un front d'un signal dans des éléments retardateurs (211) sensibles à des variations du paramètre environnemental ; et
à comparer le retard courant par rapport à au moins une valeur de référence (REF, BREF, BMIN, BMAX).

2. Procédé selon la revendication 1, **caractérisé en ce qu'**il consiste à comparer un retard courant mesuré par rapport à deux valeurs seuil prédéterminées (BMIN, BMAX) définissant une plage de fonctionnement autorisée du circuit intégré.

3. Procédé selon la revendication 1, **caractérisé en ce qu**'il consiste à comparer le retard courant par rapport à une valeur de référence unique (BREF).

4. Procédé selon la revendication 3, **caractérisé en ce qu**'il consiste à asservir la valeur d'un élément retardateur programmable (25) en fonction de l'écart entre le retard courant et la valeur de référence, la plage de variation possible étant, de préférence, prédéterminée.

5. Procédé selon la revendication 4, **caractérisé en ce qu**'il consiste à comparer ledit écart par rapport à deux valeurs seuil prédéterminées.

6. Procédé selon l'une quelconque des revendications 1 à 5, **caractérisé en ce qu**'il consiste à synchroniser un instant de lecture de bascules (212) dont les entrées respectives sont connectées en sortie des éléments retardateurs (211) pour délivrer un mot binaire constituant une évaluation du retard de propagation courant.

7. Circuit intégré (1), **caractérisé en ce qu**'il comporte :
un réseau d'éléments retardateurs (211) connectés individuellement à des bascules (212) dont les sorties respectives définissent des bits d'un mot de détection lié à au moins un paramètre environnemental du circuit intégré ; et
des moyens (22) de comparaison dudit mot courant par rapport à au moins un mot binaire de référence (BREF).

8. Circuit intégré selon la revendication 7, **caractérisé en ce que** lesdits éléments retardateurs (211) sont en parallèle et ont leur borne d'entrée commune reliée en sortie (251) d'un élément retardateur programmable (25) dont une borne d'entrée (24) constitue une borne d'entrée du circuit de détection.

9. Circuit selon la revendication 8, **caractérisé en ce que** ledit comparateur (22) fournit un mot (ΔB) de configuration du retardateur programmable (25) à partir d'une comparaison de le mot courant par rapport à une valeur de référence.

10. Circuit selon la revendication 9, **caractérisé en ce qu'**il comporte des moyens pour fixer une plage de variation du retard programmable.

11. Circuit selon la revendication 7, **caractérisé en ce que** lesdits éléments retardateurs (211) sont en série.

12. Circuit selon l'une quelconque des revendications 7 à 11, **caractérisé en ce qu**'il comporte en outre un élément retardateur moyen (215) intercalé entre une borne (23) d'application d'un signal de déclenchement de lecture et les entrées d'horloge respectives des différentes bascules.

## Claims

1. A method for detecting variations of at least one environmental parameter (V, T) of an integrated circuit (1), **characterized in that** it consists of:
evaluating a propagation delay (τ) of an edge of a signal in delay elements (211) sensitive to variations of the environmental parameter; and
comparing the current delay with at least one reference value (REF, BREF, BMIN, BMAX).

2. The method of claim 1, **characterized in that** it consists of comparing a current measured delay with two predetermined threshold values (BMIN, BMAX) defining an allowed operating range of the integrated circuit.

3. The method of claim 1, **characterized in that** it consists of comparing the current delay with a single reference value (BREF).

4. The method of claim 3, **characterized in that** it consists of controlling the value of a programmable delay element (25) according to the difference between the current delay and the reference value, the possible variation range being, preferably, predetermined.

5. The method of claim 4, **characterized in that** it consists of comparing said difference with two predetermined threshold values.

6. The method of any of claims 1 to 5, **characterized in that** it consists of synchronizing a time of reading from flip-flops (212) having their respective inputs connected at the output of the delay elements (211) to provide a binary word forming an evaluation of the current propagation delay.

7. An integrated circuit (1), **characterized in that** it includes:
a network of delay elements (211) individually connected to flip-flops (212), the respective inputs of which define bits of a detection word linked to at least one environmental parameter of the integrated circuit; and
means (22) for comparing said current word with at least one binary reference word (BREF).

8. The integrated circuit of claim 7, **characterized in that** said delay elements (211) are in parallel and have their common input terminal connected at the output (251) of a programmable delay element (25), an input terminal (24) of which forms an input terminal of the detection circuit.

9. The circuit of claim 8, **characterized in that** said comparator (22) provides a word (ΔB) for configuring the programmable delay (25) element based on a comparison of the current word with a reference value.

10. The circuit of claim 9, **characterized in that** it includes means for determining a variation range of the programmable delay.

11. The circuit of claim 7, **characterized in that** said delay elements (211) are in series.

12. The circuit of any of claims 7 to 11, **characterized in that** it further includes an average delay element (215) interposed between a read triggering signal terminal (23) and the respective clock inputs of the different flip-flops.

## Patentansprüche

1. Ein Verfahren zum Detektieren von Variationen von mindestens einem Umgebungsparameter (V, T) von einer integrierten Schaltung (1), **dadurch gekennzeichnet, dass** es Folgendes aufweist:
Evaluieren einer Ausbreitungsverzögerung (τ) von einer Kante bzw Flanke von einem Signal in Verzögerungselementen (211), das empfindlich gegenüber Variationen von dem Umgebungsparameter ist; und
Vergleichen der laufenden bzw aktuellen Verzögerung mit mindestens einen Referenzwert (REF, BREF, BMIN, BMAX).

2. Verfahren nach Anspruch 1, **dadurch gekennzeichnet, dass** es Vergleichen einer aktuell gemessenen Verzögerung mit zwei vorherbestimmten Schwellenwerten (BMIN, BMAX) aufweist, die einen zulässigen Betriebsbereich der integrierten Schaltung definieren

3. Verfahren nach Anspruch 1, **dadurch gekennzeichnet, dass** es Vergleichen der aktuellen Verzögerung mit einem einzelnen Referenzwert (BREF) aufweist.

4. Verfahren nach Anspruch 3, **dadurch gekennzeichnet, dass** es Steuern des Wertes eines programmierbaren Verzögerungselements (25) aufweist, und zwar gemäß der Differenz zwischen der aktuellen Verzögerung und dem Referenzwert, wobei der mögliche Variationsbereich vorzugsweise vorherbestimmt ist.

5. Verfahren nach Anspruch 4, **dadurch gekennzeichnet, dass** es Vergleichen der Differenz mit zwei vorherbestimmten Schwellenwerten aufweist.

6. Verfahren nach irgendeinem der Ansprüche 1 bis 5, **dadurch gekennzeichnet, dass** es Synchronisieren einer Zeit des Ablesens von Flip-Flops (212) aufweist, deren entsprechende Eingänge mit den Ausgängen der Verzögerungselemente (211) verbunden sind, um ein binäres Wort vorzusehen, dass eine Evaluierung der aktuellen Ausbreitungsverzögerung bildet.

7. Eine integrierte Schaltung (1), **dadurch gekennzeichnet, dass** sie Folgendes aufweist:
ein Netzwerk mit Verzögerungselementen (211), die individuell mit Flip-Flops (212) verbunden sind, wobei deren entsprechende Eingänge Bits von einem Detektionswort definieren, dass mit mindestens einem Umgebungsparameter der integrierten Schaltung verbunden ist; und
Mittel (22) zum Vergleichen des aktuellen Wortes mit mindestens einem binären Referenzwort (BREF).

8. Integrierte Schaltung nach Anspruch 7, **dadurch gekennzeichnet, dass** die Verzögerungselemente (211) parallel sind, und ihr gemeinsamer Eingangsanschluss mit dem Ausgang (251) von einem programmierbaren Verzögerungselement (25) verbunden ist, wobei dessen Eingangsanschluss (24) einen Eingangsanschluss der Detektionsschaltung bildet.

9. Schaltung nach Anspruch 8, **dadurch gekennzeichnet, dass** der Komparator (22) ein Wort (ΔB) vorsieht, und zwar zum Konfigurieren des programmierbaren Verzögerungs-(25)-Elements basierend auf einem Vergleich des aktuellen Worts mit einem Referenz- bzw. Bezugswert

10. Schaltung nach Anspruch 9, **dadurch gekennzeichnet, dass** es Mittel aufweist zum Bestimmen eines Variationsbereiches der programmierbaren Verzögerung

11. Schaltung nach Anspruch 7, **dadurch gekennzeichnet, dass** die Verzögerungselemente (211) seriell bzw in Reihe sind.

12. Schaltung nach irgendeinem der Ansprüche 7 bis 11, **dadurch gekennzeichnet, dass** sie ferner ein Durchschnittsverzögerungselement (215) aufweist, dass angeordnet ist, zwischen einem Leseauslösesignalanschluß bzw. Lese-Trigger-Signalterminal (23) und den entsprechenden Uhr- bzw Takteingängen der verschiedenen Flip-Flops.
